# EUROPEAN PATENT APPLICATION

(11) **EP 1 184 805 A1**
(43) Date of publication of application: **06.03.2002**
(21) Application number: 00118698.0
(22) Date of filing: 29.08.2000
(51) Int. Cl.: G06K 17/00, G06K 7/10

(54) **Electronic device for a wafer container, wafer manufacturing system, and method**

(71) Applicant: MOTOROLA, INC., Schaumburg, IL 60196 (US)
(72) Inventor: Charles, Alain Bernard, 03-20, Singapore 589625 (SG); Maltabes, John George, Austin 78728, Texas (US); Mautz, Karl Emerson, 01326 Dresden (DE)
(74) Representative: Gibson, Sarah Jane

(57) **Abstract**

A wafer container (200) carries a semiconductor wafer (201) between first (110) and second (120) stations to apply first and second processes, respectively, to the wafer. An electronic device (205) attached to the container comprises a receiver unit (210) to receive first data (111) indicative on how the first process has been performed; a memory unit (220) to temporarily store the first data and an instruction (131) indicative on how the second process is to be performed; a processor unit (230) to qualify the instruction in respect to the first data and to provide second data (122) that determines the second process; and a transmitter unit (240) to output the second data to the second station before the second station applies the second process.

## Description

### Field of the Invention

The present invention relates to integrated circuit fabrication and, more particularly, to a method and apparatus for handling wafer containers.

### Background of the Invention

Integrated circuits are manufactured from semiconductor wafers that are processed in a variety of stations. Between the stations, the wafers are carried in wafer containers.

Due to their extraordinary precision and complexity, the wafers are very expensive. It is therefore of paramount importance to handle the containers with extreme care. The diligence of a human operator is relied on, for example, when containers are identified with handwritten labels. Unfortunately, people are relatively slow, quickly fatigued by repetitive tasks, and handling errors are potentially catastrophic.

There is an ongoing need to provide an improved wafer container which mitigates some or all of these disadvantages and limitations of the prior art.

### Brief Description of the Drawings

- FIG. 1: is a simplified block diagram of a semiconductor wafer manufacturing system with a first station, a second station, a wafer container and an electronic device according to the present invention, wherein the device is associated with the wafer container;
- FIG. 2: is a simplified block diagram of the electronic device of FIG. 1 with more detail;
- FIG. 3: is a simplified block diagram of the system of FIG. 1 with more equipment; and
- FIG. 4: is a simplified flow chart diagram of a system operation that comprises a method to operate the electronic device according to the present invention.

### Detailed Description of the Invention

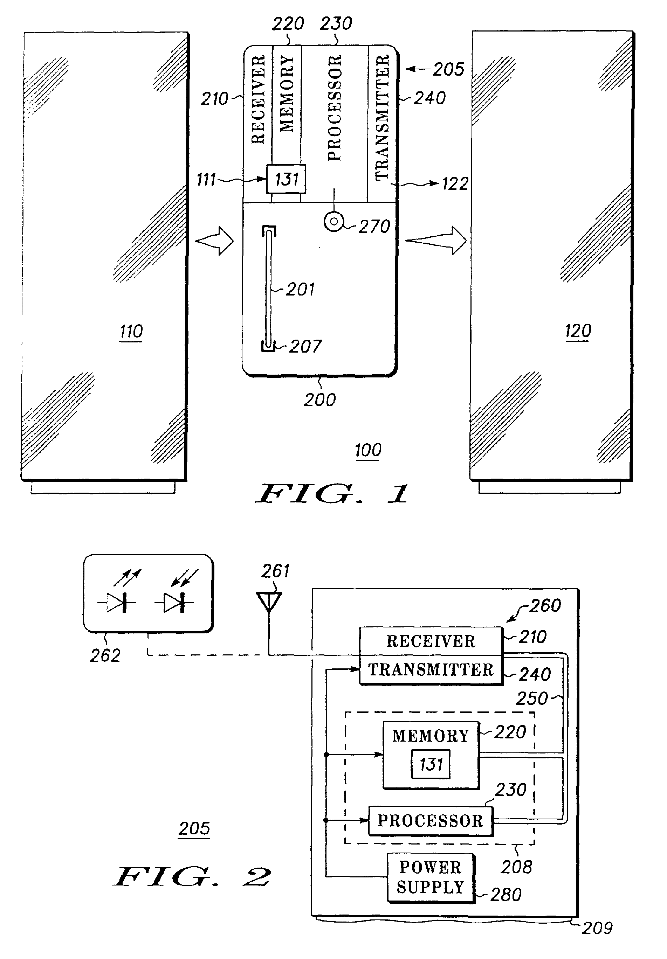

FIG. 1 is a simplified block diagram of a semiconductor wafer manufacturing system 100 ("factory") with first station 110, second station 120, wafer container 200, and electronic device 205 ("device") according to the present invention. Device 205 is associated with wafer container 200.

Wafer container 200 (hereinafter "container") is, for example, a Front Opening Unified Pod (FOUP), a cassette according to the Standard Mechanical Interface (SMIF) system ("SMIF pod"), or any other suitable enclosure that protects wafer 201 from contamination (e.g., by particles). Usually, container 200 has slots 207, each for holding a single wafer 201.

When in operation, container 200 carries at least one wafer 201; however, lots up to N wafers in a single container are common. For example, a FOUP for a 300 millimeter wafer factory is designed to carry a lot with N = 25, N = 13 or N = 1 wafers. For convenience, the following explanation uses the term "wafer" in singular with the intention that "wafer" stands for any number between 0 and N of wafers. Container 200 can also be empty, for example, for container 200 that is being cleaned.

Wafer container 200 carries a semiconductor wafer 201 between first station 110 and second station 120. Station 110 applies a first process (cf. step 310 in FIG. 4) wafer 201 or to container 200; at a later time-point, station 120 applies a second process (cf. 320 in FIG. 4) to wafer 201.

Station 110/120 is a process tool, a metrology tool, a transport tool, a cleaning tool, a stocker, a buffer, a loadport, or a wafer sorter. A process tool modifies the wafer, for example, by lithography exposing, etching, polishing (e.g., CMP), or otherwise. A metrology tool monitors the wafer. A transport tool provides transportation of the container, such as an automated vehicle that picks up and carries the container. A cleaning tool removes contamination from empty containers; it can be located outside the factory. Stockers and buffers temporarily store containers with wafers. A loadport is usually attached to a tool and moves the wafer to and from the tool.

The term "process" is intended to be a collective identifier for actions that take place in station 110/120. Application examples are given later.

According to the present invention, device 205 is provided for controlling at least the second process. Device comprises receiver unit 210, memory unit 220, processor unit 230, and transmitter unit 240.

Receiver unit 210 receives first data 111 (illustrated by an arrow, e.g., from station 110) that is indicative on how the first process has been performed (quality and quantity). Memory unit 220 temporarily stores first data 111 and stores instruction 131 that indicates how the second process is scheduled to be performed (for the later time-point). Processor unit 230 qualifies instruction 131 in respect to first data 111 and thereby provides second data 122 (arrow) that determines the second process (cf. step 320) in respect to quality and quantity. Transmitter unit 240 outputs second data 122 to second station 120 before second station 120 applies the second process. Thereby the second process is controlled.

Protocols that ensure reception and transmission to receiver unit 210 and from transmitter unit 240 are well known in the art.

Preferably, receiver unit 210 also receives instruction 131; this is convenient, but not required. Preferably, receiver unit 210 receives first data 111 at a first time point and receives instruction 131 at a second, later time point.

Optionally, processor unit 230 receives first data 111 from sensor 270 located within wafer container 200.

FIG. 2 is a simplified block diagram of electronic device 205 of FIG. 1 with more detail. Electronic device 205 is shown with receiver unit 210, memory unit 220, processor unit 230, transmitter unit 240, as well as with bus 250 coupling them. Preferably, processor unit 230 and memory unit 220 are implemented on a single monolithic chip ("embedded microprocessor", dashed frame 208).

Preferably, receiver unit 210 and transmitter unit 240 are combined to transceiver unit 260. Conveniently, transceiver unit 260 is a wireless transceiver operating as radio frequency transceiver (cf. antenna 261), or an infra-red transceiver (cf. optical interface 262 with symbols for a light emitting diode LED and for a photo diode). Persons of skill in the art are able to use other wireless transceivers without the need of further explanation herein. For example, a transceiver can comprise inductive coils. In case of a wirebound transceiver, a direct electrical contact to the environment of device 205 is established (not illustrated).

Preferably, memory unit 220 is a non-volatile memory, such as an EEPROM or an SRAM. Volatile memories can also be used (e.g., DRAM). Conveniently, instruction 131 stored in memory unit 220 optionally comprises (additionally to process 320) also information about further processes.

Power supply 280 for units 210/240, 220, 230 is implemented by a long lasting small battery, by a photovoltaic element, by a thermal converter, by an inductive power converter that relies on externally applied electromagnetic energy or by any other suitable power supply means.

Preferably, device 205 remains attached to container 200 permanently; i.e., also when container 200 is cleaned. A convenient attaching means is adhesive 209. Preferably, device 205 is located at the same location for all containers 200 in factory 100. Attaching device 209 outside the container, e.g., for a FOUP outside its plastic enclosure is convenient.

Further modifications are possible. For example, container 200 can have a barcode tag; an operator interface (e.g., display, buzzer, keys) can also be provided with device 205.

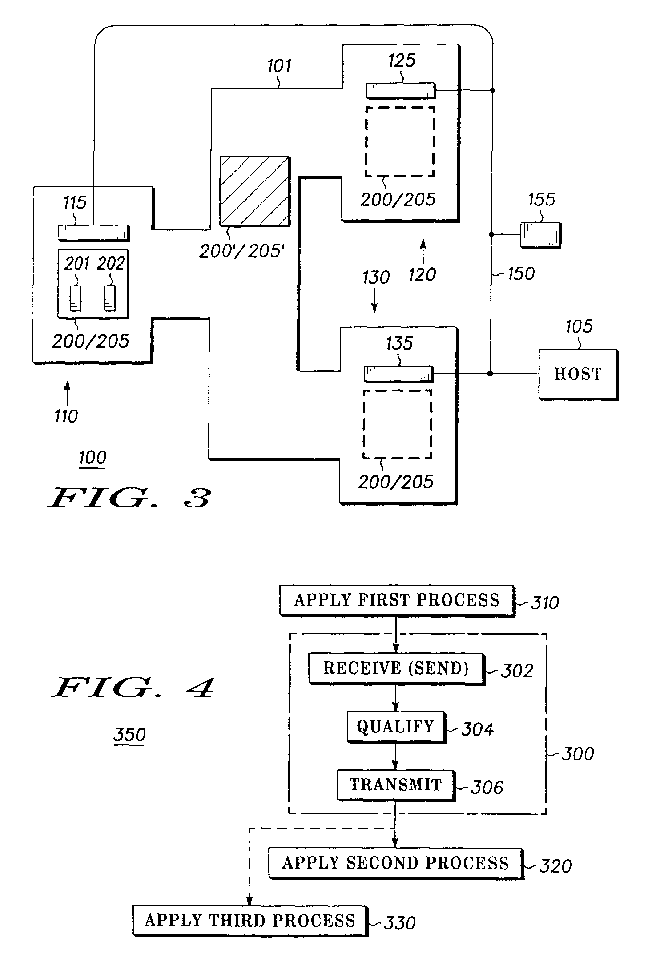

FIG. 3 is a simplified block diagram of factory 100 of FIG. 1 with more equipment: stations 110/120 (cf. FIG. 1), third station 130, container transportation means 101, factory transmitter 155, station transmitters 115, 125, 135 (at stations 110, 120, 130, respectively), 105 host and factory bus 150 ("backbone"). The combination of container 200 with device 205 is shown in station 110. Depending on the second data, combination 200/205 is moved to station 120 or, optionally, moved to station 130.
FIG. 3 also shows further container 200' and further device 205'.

In the example of FIG. 3, container 205 carries wafer 201 and wafer 202 (maximum N wafers). There are applications (e.g., splitting lots) where second data 122 (cf. FIG. 1) also determines the quality and quantity of third process 330 in third station 130 applied to wafer 202.

Factory transmitter 155 is a long range transmitter that exchanges data (e.g., data 111, 122, instruction 131, cf. FIG. 1) with device 205 independently from its location. Preferably, transmitter 155 simultaneously communicates with further devices. As mentioned, protocols are well known: the operation in time frames ("time slots") is one option.

In comparison to the factory transmitters, station transmitters 115, 125, 135 have a range that is, preferably, reduced to local communication between device 201 and stations 110, 120, 130, respectively. Communication between device and station occurs when both are proximate, with an actual distance varying based on what kind of transceiver 260 is used.

In factory 100 with a plurality of container/device combinations 200/205, data is exchanged between devices as well as between stations and devices. In other words, transceiver 260 of electronic device 205 communicates with further electronic device 205' at further container 200' and with further stations. Where needed, communication can be routed at least partly via factory bus 250, for example, in coordination by host 105.

FIG. 4 is a simplified flow chart diagram of a system operation 350 that comprises method 300 to operate electronic device 205 according to the present invention.

Operation method 350 comprises applying first process 310, applying second process 320, and method 300 to operate device 205 as well as optionally applying third process 330. Method 300 (dashed frame) comprises the steps receiving (sending) 302, qualifying 304 and transmitting 306.

Method 300 is performed after first station 110 has applied first process 310 to wafer 201 and before second station 120 applies second process 320 also to wafer 201.

In receiving step 302, device 205 receives first data 111 from first station 120. First data 111 indicates quality and quantity of first process 310.

Based on first data 111, in qualifying step 304, device 205 qualifies in step 304 instruction 131. Instruction 131 indicates the expected quality and quantity of second process 320. Qualifying 304 is performed to provide second data 122 that determines final quality and quantity of second process 320.

In transmitting step 306, device 205 transmits second data 122 to second station 120.

Optionally, in qualifying step 304, device 205 provides third data for an alternative third process 330 (dashed line) and in transmitting step 306, device 205 transmits the third data to third station 130. Conveniently, the third data is provided to control third process 330 to be applied on further wafer 202 (cf. FIG. 3). Splitting the lots is, however, not required for all situations; the third process can be applied to wafer 201 after applying second process 320.

Returning to explain method 350 to operate wafer manufacturing system 100 (that uses wafer container 200 having an electronic device 205 attached thereto), method 350 is presented as follows:

Step 310, first station 110 applies first process 310 to wafer 201; step 302, first station 110 sends first data 111 to electronic device 205 (data 111 indicates quality and quantity of process 310), electronic device 205 receives first data 111; step 304, electronic device 205, based on first data 111, qualifies instruction 131 (indicates expected quality and quantity of process 320) to provide second data 122 (determines final quality and quantity of second process 320); step 306, electronic device 205 transmits second data 122 to second station 120; step 320, second station 120 applies second process 320 to wafer 201.

The following column-like overviews explain representative applications for the present invention. For all cases, similar left columns indicate station 110 with process 310 applied to wafer 201, first data 111, instruction 131, second data 122, and station 120 with process 320; and if applicable, third station 130 and third process 330 (cf. FIG. 4). The right columns give examples; reference numbers for device 200, wafer 201, etc. are left out for simplicity. The applications are intended to be nonlimiting examples; those of skill in the art will find further applications without departing from the scope of the present invention. The phrase "for example" is therefore incorporated by reference into each text line on the right side. The abbreviation ### stands for any combination of alphanumeric or other symbols that in a factory identify a wafer, a station, a container, a process, a value and the like.

### Example 1: Assigning individual wafers to slots

- station 110: wafer sorter
- process 310: sets up a lot
- data 111: table with wafer and slot identification, wafer ### in slot 1, wafer ### in slot 2, ... wafer ### in slot 25
- instruc. 131: lithography
- data 122: parameters for lithography
- process 320: lithography

This approach allows the reduction of overhead in the host. Optionally, station 120 can authenticate incoming wafers. Tracking each individual wafer as it goes through the factory becomes possible.

### Example 2: Splitting Flow

- station 110: metrology tool
- process 310: measuring thickness of top oxide layer
- data 111: thickness for each wafer
- instruc. 131: compare actual thickness to allowable thickness according to specification
- data 122: identification of out-of-specification and in-specification wafers
- process 320: polishing in-specification wafers
- station 120: polishing tool
- process 330: reworking the out-specification wafers, e.g., by depositing oxid
- station 130: oxid deposition tool

The approach allows splitting the process flow for a wafer lot (e.g., wafers 201 and 202). In other words, the next process station 120/130 for any wafer 201 and 202 can be identified by electronic device. Rework wafer (i.e., wafers that required unscheduled re-application of processes) can also be identified.

### Example 3: "Hot Lot"

- station 110: host interface
- process 310: checking schedule
- data 111: emergency indication, wafer processing behind schedule
- instruc. 131: next process is ###
- data 122: prioritize over other containers
- process 320: transporting container to ### tool with a priority over other containers
- station 120: transport tool

In wafer manufacturing, there are some processes that have to be performed within a finite time window (e.g., from making a gate oxide to depositing poly silicon; from wet cleaning to depositing; etc.). The feature allows to speed up processing of a certain wafer even if processing this wafer is on schedule. The total cycle time the selected wafer stays in the factory becomes more variable, thus the factory can respond to customer needs more flexible.

### Example 4: Cleaning History

- station 110: cleaning tool
- process 310: cleaning
- data 111: data stamp when cleaned
- instruc. 131: the current date
- data 122: move wafers to different container, clean container
- process 320: moving wafers
- station 120: robot
- process 330: cleaning container
- station 130: cleaning tool

The device either allows the container to carry the wafer or prevents the container from carrying the wafer. In a further embodiment, a container that is contaminated only slightly can be allowed to carry a wafer under certain conditions, for example, when the wafer has been sealed. The cleaning history can also be defined by counting events where the container is likely exposed to contamination.

This feature helps to save costs by extending the maintenance interval between consecutive container cleaning processes.

### Example 5: Trigger Actions

- station 110: transport tool
- process 310: container being damaged by accident
- instruc. 131: move container to ### tool
- data 122: do not move container to ### tool, instead issue warning signal to human operator (preferably, via host)
- process 320: issuing warning signal
- station 120: transport tool (same as station 110)

A damaged container is identified and can be inspected, removed, or repaired before the container cause further damage to wafers or to stations. Reporting damaged containers is convenient, but not limiting; the device can also convey data that report damage on other elements in the factory (e.g., loadport problems). The second data has substantially the opposite meaning than the instruction ("do" versus "do not").

### Example 6: System substantially operating without host

- station 110:: process tool
- process 310: process "k"
- data 111: list of substantially all processes (1, 2, k, ...) to be applied to wafer 201
- instruc. 131: pointer to process "k+1" on the list
- data 122: indication of "k+1"
- process 320: process "k+1"
- station 120: process tool

This approach distributes functionality of the host to the electronic devices. Even is an host is used, the host is relieved from real time handling, for example, of messages whose content does substantially not change, of administrative tasks, etc. Proving redundancy, the electronic devices back-up the host.

### Example 7: Changing or Adjusting Recipe

- station 110: metrology tool
- process 310: measuring thickness
- data 111: thickness of wafer
- instruc. 131: etching with standard etch time
- data 122: modified etch time for each wafer
- process 320: etching with modified etch time
- station 120: etch tool

By adjusting the etching process, variations in earlier previous process (such as depositing) can be compensated. For example, for etching away a layer, the etch time depends on a thickness of the layer. In other words, the function of host is distributed across the factory.

### Example 8: Virtual Stocker

- station 110: stocker
- process 310: prioritizing FOUP for run-order
- data 111: time sensitive component for certain wafers such as delay between cleaning and depositing)
- instruc. 131: priority to certain lot
- data 122: remaining time
- process 320: oxid deposition
- station 120: oxid deposition tool

### Example 9: Design of Experiment

- station 110: load port for poly Si etch tool
- process 310: poly Si etch
- data 111: different over etch times for different wafers
- instruc. 131: write recipe that varies the over etch time
- data 122: different recipes for different wafers; run-order
- process 320: poly Si etch
- station 120: etch tool

It is an advantage that the experimental results reside in the electronic device. Storing and managing the results in a host database becomes optional.

While the invention has been described in terms of particular structures, steps, devices and materials, those of skill in the art will understand based on the description herein that it is not limited merely to such examples and that the full scope of the invention is properly determined by the claims that follow

## Claims

1. An electronic device (205) for a wafer container (200), said wafer container (200) for carrying a semiconductor wafer (201) between a first station (110) and a second station (120), said first station applying a first process (310) to said wafer (201) or to said container (200), said second station at a later time-point applying a second process (320) to said wafer (201), said electronic device (205) for controlling said second process (320) and comprising:
a receiver unit (210) to receive first data (111) indicative on how said first process (310) has been performed;
a memory unit (220) to temporarily store said first data (111) and to store an instruction (131) indicative on how said second process (320) is scheduled to be performed;
a processor unit (230) to qualify said instruction (131) in respect to said first data (111) and to provide second data (122) that determines said second process (320) in respect to quality and quantity; and
a transmitter unit (240) to output said second data (122) to said second station (120) before said second station (120) applies said second process (320), thereby controlling said second process (320).

2. The electronic device (205) of claim 1, wherein said receiver unit (210) also receives said instruction (131).

3. The electronic device (205) of claim 2, wherein said receiver unit (210) receives said first data (111) at first time point and receives said instruction (131) at a second, later time point.

4. The electronic device (205) of claim 1, wherein said receiver unit (210), said memory unit (220), said processor unit (230), and said transmitter unit (240) are coupled by a bus (250).

5. The electronic device (205) of claim 1, wherein said receiver unit (210) and said transmitter unit (240) are implemented as a transceiver unit (260).

6. The electronic device (205) of claim 5, wherein said transceiver unit (260) is a wireless transceiver.

7. The electronic device (205) of claim 6, wherein said wireless transceiver is a radio frequency transceiver.

8. The electronic device (205) of claim 6, wherein said wireless transceiver is an infra-red transceiver.

9. The electronic device (205) of claim 1, wherein said memory unit (220) is a non-volatile memory.

10. The electronic device (205) of claim 9, wherein said non-volatile memory is an EEPROM.

11. The electronic device (205) of claim 1 that is permanently attached to said wafer container (200) by an adhesive (209).

12. The electronic device (205) of claim 1, wherein said processor unit (230) and said memory unit (220) are implemented on a single monolithic chip.

13. The electronic device (205) of claim 1, wherein said receiver unit (210) receives said first data (111) from a sensor (270) within said wafer container (200).

14. The electronic device (205) of claim 1, wherein said transceiver (260) communicates with a further electronic device (205') at a further wafer container (200') and with further stations.

15. The electronic device (205) of claim 1, wherein for a second wafer (202) carried in said wafer container (200) said second data (122) also determines the quality and/or the quantity of a third process (330) in a third station (130).

16. A method (300) to operate an electronic device (200) attached to a wafer container (200) that carries a wafer (201), said method being performed after a first station (110) has applied a first process (310) to said wafer (201) and before said second station (120) applies a second process (320) to said wafer (201), said method comprising the steps of:
receiving (302) first data (111) from said first station (120), said first data (111) to indicate quality and quantity of said first process (310);
based on said first data (111), qualifying (304) an instruction (131) that indicates expected quality and quantity of said second process (320) to provide second data (122) that determines final quality and quantity of said second process (320); and
transmitting (306) said second data (122) to said second station (120).

17. The method of claim 16, wherein in said qualifying step (304), third data for an alternative third process (330) is provided, and wherein in said transmitting step (306), said third data is transmitted to a third station (130).

18. The method of claim 17, wherein in said qualifying step (304), said third data is provided for said third process (330) to be applied on a further wafer (202)

19. A method (350) to operate a wafer manufacturing system (100) that uses a wafer container (200) having an electronic device (205) attached thereto, said wafer container (200) to carry a first wafer (201) from a first station (110) to a second station (120), said method (350) comprising the following steps:
by said first station (110), applying a first process (310) to said wafer (201);
by said first station (110), sending (302) first data (111) that indicates quality and quantity of said first process (310) from said first station (120) to said electronic device (205) and, by said electronic device (205), receiving said first data (111);
by said electronic device (205), based on said first data (111), qualifying (304) an instruction (131) that indicates expected quality and quantity of a second process (320) to provide second data (122) that determines final quality and quantity of said second process (320);
by said electronic device (205), transmitting (306) said second data (122) to said second station (120); and
by said second station (120), applying said second process (320) to said wafer (201).
